# EUROPÄISCHE PATENTSCHRIFT

(11) **EP 2 802 753 B1**
(45) Veröffentlichungstag und Bekanntmachung des Hinweises auf die Patenterteilung: **05.04.2017**
(21) Anmeldenummer: 13701361.1
(22) Anmeldetag: 11.01.2013
(51) Int. Cl.: F01N 3/28, F01N 3/20

(54) **ABGASSYSTEM EINER BRENNKRAFTMASCHINE UND VERFAHREN ZUR AUFBEREITUNG EINES IN BRENNKRAFTMASCHINENABGAS EINGEBRACHTEN REDUKTIONSMITTELS**
EXHAUST GAS SYSTEM OF AN INTERNAL COMBUSTION ENGINE, AND METHOD FOR PREPARING A REDUCING AGENT WHICH IS INTRODUCED INTO THE INTERNAL COMBUSTION ENGINE EXHAUST GAS
SYSTÈME D'ÉCHAPPEMENT D'UN MOTEUR À COMBUSTION INTERNE ET PROCÉDÉ DE PRÉPARATION D'UN AGENT RÉDUCTEUR INTRODUIT DANS LES GAZ D'ÉCHAPPEMENT DUDIT MOTEUR

(30) Priorität: 14.01.2012 DE 102012000597
(43) Veröffentlichungstag der Anmeldung: 19.11.2014
(73) Patentinhaber: Daimler AG, 70327 Stuttgart (DE)
(72) Erfinder: BECKMANN, Thomas, 70176 Stuttgart (DE); BRAUN, Tillmann, 73663 Berglen (DE); DUVINAGE, Frank, 73271 Holzmaden (DE); HERWIG, Helmut, 71332 Waiblingen (DE); KOBIELA, Bernhard, 74399 Walheim (DE); LÜCKERT, Peter, 73663 Berglen (DE); PEPE, Antonio, 70195 Stuttgart (DE); RAITSCHEV, Peter, 70190 Stuttgart (DE); SCHOMMERS, Joachim, D-71573 Allmersbach (DE)
(74) Vertreter: JENSEN & SON
(86) Internationale Anmeldenummer: PCT/EP2013/000067
(87) Internationale Veröffentlichungsnummer: WO 2013/104544

(56) Entgegenhaltungen:
- EP-A1- 2 395 211
- DE-A1-102009 041 345
- JP-A- 2009 228 484

## Beschreibung

Die Erfindung betrifft ein Abgassystem einer Brennkraftmaschine welches zur Abgasführung einen ersten zylindrischen Abgasleitungsrohrabschnitt und einen zweiten zylindrischen Abgasleitungsrohrabschnitt aufweist, wobei mit dem Reduktionsmittel angereichertes Abgas vom ersten Abgasleitungsrohrabschnitt in den zweiten Abgasleitungsrohrabschnitt überführbar ist. Ferner betrifft die Erfindung ein Verfahren zur Aufbereitung eines in ein Abgassystem einer Brennkraftmaschine eingebrachten Reduktionsmittels.

Zur Abgasnachbehandlung werden oftmals im Ausgangszustand flüssige Reduktionsmittel wie Mineralölkraftstoff oder wässrige Harnstofflösung ins Abgas von Brennkraftmaschinen eingebracht. Dabei besteht ein Problem in Bezug auf die Aufbereitung des in flüssigem Zustand eingebrachten Reduktionsmittels im Hinblick auf eine anzustrebende gleichmäßige Verteilung und im Hinblick auf eine Verdampfung. Bei wässriger Harnstofflösung besteht zusätzlich noch das Problem, durch Hydrolyse und/oder Thermolyse den zur selektiven katalytischen Stickoxid-Reduktion benötigten Ammoniak aus dem Harnstoff freizusetzen. Zur Lösung des Problems sind bereits eine Vielzahl von Abgassystemvarianten mit Aufbereitungsstrecken, Mischern, Verdampfern und Hydrolysekatalysatoren vorgeschlagen worden. Trotz der zahlreichen Lösungsvorschläge besteht weiterhin Verbesserungsbedarf in Bezug auf die Aufbereitung von insbesondere in flüssigem Zustand ins Abgas eingebrachten Reduktionsmitteln in dem vorstehend genannten Sinn.

Die EP 2395211 A1 offenbart ein Abgassystem mit einem Verbindungsrohr zwischen einer ersten Abgasnachbehandlungseinrichtung und einer zweiten Abgasnachbehandlungseinrichtung, in welches Reduktionsmittel über eine Zufuhreinrichtung zugeführt wird. Der stromabwärtige Teil des Verbindungsrohrs erstreckt sich entlang der äußeren Umfangsfläche der zweiten Abgasnachbehandlungseinrichtung.

Die JP 2009228484 A1 zeigt ein Abgassystem für eine Brennkraftmaschine mit einer Reduktionsmittel-Zufuhreinrichtung für die Zuführung von Reduktionsmittel zu einem Abgasstrom in einem zylindrischen Rohr. Das zylindrische Rohr ist senkrecht zu einem ebenfalls zylindrischen Gehäuse angeordnet, in welchem ein SCR-Katalysator untergebracht ist. Das Austrittsende des zylindrischen Rohrs ist stromaufwärts des SCR-Katalysators so mit dem zylindrischen Gehäuse verbunden, dass der mit Reduktionsmittel beladene Abgasstrom tangential aus dem zylindrischen Rohr in das zylindrische Gehäuse eintritt.

Die DE 102009041345 A1 offenbart ein Abgassystem, bei welchem die Einbringung eines Zusatzstoffes im Bereich eines für einem Hauptkanal eines Abgasstranges vorgesehenen Bypasses erfolgt. In dem Bypass sind mehrere Prallbleche vorgesehen.

Aufgabe der Erfindung ist es daher, eine Vorrichtung und ein Verfahren anzugeben, mit welchen eine möglichst gute Aufbereitung von in Abgas einer Brennkraftmaschine eingebrachtem Reduktionsmittel ermöglicht ist.

Diese Aufgabe wird durch ein Abgassystem mit den Merkmalen des Anspruchs 1 und durch ein Verfahren mit den Merkmalen des Anspruchs 10 gelöst.

Das erfindungsgemäße Abgassystem weist zur Abgasführung einen ersten zylindrischen Abgasleitungsrohrabschnitt und einen zweiten zylindrischen Abgasleitungsrohrabschnitt auf. Dabei ist an dem ersten Abgasleitungsrohrabschnitt eine Injektoreinheit zur Einbringung eines Reduktionsmittels in durch den ersten Abgasleitungsrohrabschnitt strömendes Abgas angeordnet. Der zweite Abgasleitungsrohrabschnitt weist eine Zylinder-Mantelfläche, ein geschlossenes erstes Ende und ein offenes zweites Ende sowie eine Öffnung in der Zylinder-Mantelfläche angrenzend an das geschlossene Ende auf. Ein offenes Ende des ersten Abgasleitungsrohrabschnitts ist derart formschlüssig mit dem zweiten Abgasleitungsrohrabschnitt verbunden, dass aus dem offenen Ende des ersten Abgasleitungsrohrabschnitts ausströmendes Abgas in wenigstens annähernd senkrechter Richtung in Bezug auf eine Längserstreckung des zweiten Abgasleitungsrohrabschnitts durch die Öffnung in der Zylinder-Mantelfläche des zweiten Abgasleitungsrohrabschnitts in den zweiten Abgasleitungsrohrabschnitt einströmen kann. Somit erfolgt in unmittelbarem Anschluss an die Verbindungsstelle des ersten Abgasleitungsrohrabschnitts mit dem zweiten Abgasieitungsrohrabschnitt eine Umlenkung der Hauptströmungsrichtung des mit dem Reduktionsmittel angereicherten Abgases um wenigstens annähernd 90 Grad, wodurch eine Verwirbelung des Abgases und eine gute Vermischung des Reduktionsmittels im Abgas erzielt wird. Die Öffnung in der Zylinder-Mantelfläche des zweiten Abgasleitungsrohrabschnitts weist in Richtung der Längserstreckung des zweiten Abgasleitungsrohrabschnitts eine größere Ausdehnung auf als quer zur Längserstreckung. Die Öffnung weist bevorzugt eine ovale bzw. ellipsenförmige Form auf. Es kann jedoch auch ein etwa rechteckförmiger Ausschnitt in der Zylinder-Mantelfläche vorgesehen sein. Die Längsausdehnung ist dabei etwa 1,5 bis 4 mal größer als die Querausdehnung. Infolge dieser Ausführungsform ist die Ausbildung eines besonders stabilen rotierenden Abgaswirbels im zweiten Abgasleitungsrohrabschnitt ermöglicht. Dies wiederum ermöglicht eine kurze Ausführung des zweiten Abgasleitungsrohrabschnitts bzw. einen kurze Leitungslänge bis zur anschließenden Abgasreinigungseinheit und damit eine kompakte Bauform des Abgassystems mit einer kurzen Reduktionsmittelaufbereitungsstrecke. Infolge der Verwirbelung und der dadurch bedingten Vermischung kann in vorteilhafter Weise auf einen separaten Mischer zur Verteilung von ins Abgas eingebrachtem Reduktionsmittel in der Reduktionsmittelaufbereitungsstrecke verzichtet und ein dadurch verursachter Druckverlust vermieden werden. Die Injektoreinheit ist bevorzugt so ausgebildet, dass sie das vorzugsweise flüssig vorliegende Reduktionsmittel fein vernebelt ins Abgas eindüsen bzw. einspritzen kann.

Die Randkontur des offenen Endes des ersten Abgasleitungsrohrabschnitts entspricht vorzugsweise der Randkontur der Öffnung in der Zylinder-Mantelfläche des zweiten Abgasleitungsrohrabschnitts und die formschlüssige Verbindung der beiden Abgasleitungsrohrabschnitte, etwa durch Verschweißen bewerkstelligt, ist entlang dieser Kontur gegeben. Vorzugsweise endet der erste Abgasieitungsrohrabschnitt auf der Zylinder-Mantelfläche des zweiten Abgasleitungsrohrabschnitts und ragt somit nicht in den Innenraum des zweiten Abgasleitungsrohrabschnitts hinein. Die Öffnung in der Zylinder-Mantelfläche des zweiten Abgasleitungsrohrabschnitts ist unmittelbar angrenzend oder mit geringem Abstand von vorzugsweise wenigen Millimetern an dem endseitigen Verschluss des zweiten Abgasleitungsrohrabschnitts angeordnet. Dadurch werden strömungsmäßige Totzonen vermieden. Zum Verschluss des zweiten Abgasleitungsrohrabschnitts an seinem ersten Ende kann ein den Leitungsquerschnitt abdeckender, insbesondere eben ausgeführter Deckel vorgesehen sein, dessen Normalenrichtung mit der Zylinderachsrichtung des zweiten Abgasleitungsrohrabschnitts gleichgerichtet ist. Die Querschnittsflächen des ersten Abgasleitungsrohrabschnitts und des zweiten Abgasleitungsrohrabschnitts sind zumindest im Bereich ihrer Verbindungsstelle wenigstens annähernd gleich, unterscheiden sich jedoch bevorzugt weniger als um den Faktor 1,5 voneinander. Aus dem offenen Ende des zweiten Abgasleitungsrohrabschnitts ausströmendes Abgas wird vorzugsweise einer katalytischen Abgasreinigungseinheit wie einem SCR-Katalysator, einem Hydrolysekatalysator, einem Oxidationskatalysator, einem Stickoxid-Speicherkatalysator oder einem Partikelfilter zugeleitet.

In Ausgestaltung der Erfindung ist die Injektoreinheit in geringer Entfernung stromauf von der Verbindungsstelle des ersten Abgasleitungsrohrabschnitts mit dem zweiten Abgasleitungsrohrabschnitt angeordnet. Vorzugsweise beträgt die Entfernung weniger als ein Durchmesser eines der Abgasleitungsrohrabschnitte, insbesondere weniger als die Hälfte oder ein Drittel davon. Das Bauvolumen der Reduktionsmittelaufbereitungsstrecke bzw. die zur Reduktionsmittelaufbereitung eingesetzten reduktionsmittelführenden Leitungslängen können daher besonders gering gehalten werden.

In weiterer Ausgestaltung der Erfindung ist in geringer Entfernung stromauf von der Verbindungsstelle des ersten Abgasleitungsrohrabschnitts mit dem zweiten Abgasleitungsrohrabschnitt innerhalb des ersten Abgasleitungsrohrabschnitts wenigstens ein plattenförmiges Prallelement angeordnet, auf welchem mittels der Injektoreinheit in den ersten Abgasleitungsrohrabschnitt eingebrachtes Reduktionsmittel aufprallt. Das plattenförmige Prallelement wirkt dabei als Verdampferelement. Die zur Verdampfung des flüssigen, bevorzugt in Form kleiner Tröpfchen vorliegenden Reduktionsmittels erforderliche Wärmeenergie wird vorzugsweise durch Wärmetausch mit dem angeströmten Abgas aufgenommen. Es kann jedoch auch eine separate Beheizung des Prallelements vorgesehen sein. Durch Aufprall der Reduktionsmitteltröpfchen auf das aufgeheizte Prallelement erfolgt eine wenigstens teilweise Verdampfung des Reduktionsmittels und zusätzlich eine weitere Verkleinerung der Tröpfchengröße von abprallenden Reduktionsmitteltröpfchen. Dadurch ist eine Verteilung des Reduktionsmittels im Abgas im Vergleich zu einem überwiegend in Tröpfchenform vorliegenden Reduktionsmittel verbessert. Weiterhin ist der Verdampfungsvorgang infolge des gegenüber einer alleinigen Wärmeübertragung aus dem Abgas verbesserten Wärmeübergangs von der Verdampferplatte auf aufgepralltes Reduktionsmittel verbessert. Als Folge der wenigstens teilweisen Verdampfung des Reduktionsmittels bereits an dem Prallelement ist eine weitere Verkürzung der Reduktionsmittelaufbereitungsstrecke ermöglicht. Vorzugsweise ist das Prallelement direkt über bzw. vor der Öffnung in der Zylinder-Mantelfläche des zweiten Abgasleitungsrohrabschnitts angeordnet. Das dem zweiten Abgasleitungsrohrabschnitt zugewandte Ende des Prallelements kann etwa in der Öffnungsfläche oder einige Millimeter, jedoch vorzugsweise allenfalls wenige Zentimeter in Richtung des ersten Abgasleitungsrohrabschnitts versetzt hierzu angeordnet sein. Das Prallelement kann als ebenes oder mit oberflächenvergrößernden Prägungen versehenes Blech ausgebildet sein. Das Blech kann ferner geschlitzt oder gelocht ausgeführt sein und mit einer eine Harnstoffhydrolyse fördernden oder eine Belagsbildung vermindernden Beschichtung, beispielsweise aus Titandioxid versehen, oder aufgeraut sein.

In einer bevorzugten weiteren Ausführungsform ist das Prallelement wenigstens annähernd eben ausgebildet, wobei ein Normalenvektor der Prallelementebene wenigstens annähernd senkrecht zur Abgasströmungsrichtung orientiert ist. Somit liegt ein Richtungsvektor der Abgasströmungsrichtung etwa in der Ebene des Prallelements. Dadurch ist ein niedriger Strömungswiderstand ermöglicht. Vorzugsweise ist die Richtung des Normalenvektors wenigstens annähernd parallel zur Zylinderachsrichtung des zweiten Abgasleitungsrohrabschnitts im Bereich der Öffnung in dessen Zylinder-Mantelfläche orientiert.

Die Verdampfungsrate von mittels der Injektoreinheit ins Abgas eingebrachtem Reduktionsmittel lässt sich weiter vergrößern, wenn in weiterer Ausgestaltung der Erfindung eine Mehrzahl von Prallelementen vorgesehen wird. Die Prallelemente sind bevorzugt parallel zueinander orientiert, insbesondere fluchtend hintereinander und über der Öffnung in der Zylinder-Mantelfläche des zweiten Abgasleitungsrohrabschnitts angeordnet. Je nach Größe der Öffnung in der Zylinder-Mantelfläche des zweiten Abgasleitungsrohrabschnitts können zwei bis acht Prallelemente vorgesehen sein. Vorzugsweise sind vier Prallelemente vorgesehen. In Bezug auf den von der Injektoreinheit abgegebenen Sprühkegel des Reduktionsmittels sind die Prallelemente so angeordnet, dass jedes von ihnen wenigstens teilweise vom Sprühkegel erfasst wird und damit zur Verdampfung des Reduktionsmittels beitragen kann. Hierzu ist es wiederum bevorzugt, wenn die flächenmäßige Ausdehnung der Prallelemente unterschiedlich gewählt ist. Besonders bevorzugt ist es in diesem Zusammenhang, wenn die Fläche der Prallelemente mit wachsendem Abstand zur Injektoreinheit zunimmt. In Richtung der Flächennormalen gesehen deckt in dieser Ausführungsform ein Prallelement lediglich einen Teil des Flächenbereichs des benachbarten, folgenden Prallelements ab.

Erfindungsgemäß ist eine Zylinderachse des ersten Abgasleitungsrohrabschnitts im Bereich der Verbindungsstelle mit dem zweiten Abgasleitungsrohrabschnitt auf einen Zentrumsbereich einer Querschnittsfläche des zweiten Abgasleitungsrohrabschnitts gerichtet. Die Zufuhr des mit dem Reduktionsmittel angereicherten Abgases in den zweiten Abgasleitungsrohrabschnitt erfolgt demnach sozusagen mittig in den zweiten Abgasleitungsrohrabschnitt. Infolge dessen bilden sich innerhalb des zweiten Abgasleitungsrohrabschnitts zwei gegenläufig rotierende Abgasströmungswirbel aus. Dies ermöglicht eine besonders gute Vermischung des Reduktionsmittels im Abgas. Zudem ist der tatsächliche Abgasströmungsweg gegenüber der geometrischen Länge des zweiten Abgasleitungsrohrabschnitts vergrößert. Somit ist eine Verdampfung von im Abgas verbliebenen Reduktionsmitteltröpfchen verbessert. Im Falle von Harnstoff als Reduktionsmittel ist auch dessen Hydrolyse bzw. Thermolyse verbessert.

Die Verteilung des Reduktionsmittels im Abgas lässt sich weiter verbessern, wenn in weiterer Ausgestaltung der Erfindung der zweite Abgasleitungsrohrabschnitt im Bereich der Öffnung in der Zylinder-Mantelfläche eine ovale Querschnittsform aufweist. In diesem Fall bilden sich zwei gegenläufige Abgasströmungswirbel mit in einer Draufsicht annähernd jeweils Kreisform aus. Die Abgasströmungswirbel sind infolgedessen besonders stabil.

Es ist auch denkbar, dass eine Zylinderachse des ersten Abgasleitungsrohrabschnitts im Bereich der Verbindungsstelle mit dem zweiten Abgasleitungsrohrabschnitt auf einen außermittigen Bereich einer Querschnittsfläche des zweiten Abgasleitungsrohrabschnitts gerichtet ist. Das Abgas wird damit außermittig, insbesondere annähernd tangential in Bezug auf den zweiten Abgasleitungsrohrabschnitt in diesen eingeleitet. In Verbindung mit einer hierfür vorzugsweise vorgesehenen kreisrunden Querschnittsform des zweiten Abgasleitungsrohrabschnitts im Bereich der Öffnung ist die Ausbildung eines nahezu den gesamten Querschnitt erfassenden Abgasströmungswirbels ermöglicht.

Das erfindungsgemäße Verfahren zur Aufbereitung eines in einen ersten Abgasleitungsrohrabschnitt eines Abgassystems einer Brennkraftmaschine eingebrachten Reduktionsmittels sieht vor, dass das eingebrachte Reduktionsmittel an einer in dem ersten Abgasleitungsrohrabschnitt angeordneten Verdampfereinrichtung wenigstens teilweise verdampft und anschließend zusammen mit dem Abgas der Brennkraftmaschine in einer Richtung durch eine Öffnung in einer Zylinder-Mantelfläche eines zweiten Abgasleitungsrohrabschnitts in den zweiten Abgasieitungsrohrabschnitt einströmt, die wenigstens annähernd senkrecht zu einer axialen Richtung des zweiten Abgasleitungsrohrabschnitts orientiert ist, wobei innerhalb des zweiten Abgasleitungsrohrabschnitts eine rotierende Abgasströmung ausgebildet wird. Infolge der wenigstens teilweisen Verdampfung, welche durch die Verdampfereinrichtung ermöglicht ist, kann in Verbindung mit der anschließenden Verwirbelung nach Zufuhr des Abgases in den zweiten Abgasleitungsrohrabschnitt eine besonders gute Aufbereitung des Reduktionsmittels erzielt werden. Die Leitungslänge der Reduktionsmittelaufbereitungsstrecke kann dabei kurz gehalten werden und es ist eine kompakte Bauform ermöglicht.

In Ausgestaltung des Verfahrens sind als Verdampfereinrichtung eine Mehrzahl von Verdampferplatten vorgesehen und das Reduktionsmittel wird derart in den ersten Abgasleitungsrohrabschnitt eingedüst, dass es auf alle Verdampferplatten aufprallt. Dadurch ist die Verdampfung des Reduktionsmittels verbessert, wobei eine besonders hohe Verdampfungsrate erzielt wird, wenn das Reduktionsmittel in einem höchstens spitzen Winkel in Bezug auf eine Normalenrichtung der Verdampferplatten in den ersten Abgasleitungsrohrabschnitt eingespritzt wird. Das Reduktionsmittel wird somit derart eingedüst, dass es wenigstens annähernd senkrecht auf die Verdampferplatten auftritt, womit eine gute Benetzung der Verdampferplattenoberflächen erreicht wird. Der Auftreffwinkel von eingesprühtem Reduktionsmittel auf eine Verdampferplatte beträgt bevorzugt weniger als 45 Grad in Bezug auf die Normalenrichtung der Verdampferplatte.

Weiterhin ist es bevorzugt, wenn in weiterer Ausgestaltung des Verfahrens das Reduktionsmittel wenigstens annähernd senkrecht in Bezug auf eine Abgasströmung in den ersten Abgasleitungsrohrabschnitt eingespritzt wird.

In weiterer Ausgestaltung des Verfahrens bildet das in den zweiten Abgasleitungsrohrabschnitt einströmende Abgas zwei in Bezug auf eine axiale Richtung des zweiten Abgasleitungsrohrabschnitts gesehen gegensinnig rotierende Wirbel aus. Dadurch ist eine besonders wirksame und gleichmäßige Vermischung des Reduktionsmittels im Abgas ermöglicht. Angestrebt ist eine stabile Wirbelausbildung, welche bevorzugt wenigstens teilweise bis zum Erreichen der Eintrittseite einer der Wirbelmischstrecke nachgeschalteten Abgasreinigungskomponente bzw. deren gegebenenfalls vorgesehenen Gehäuseeinlauftrichter erhalten bleibt. Dies kann insbesondere dadurch erreicht werden, wenn durch eine ovale Querschnittsform des zweiten Abgasleitungsrohrabschnitts für eine Ausbildung von zwei gegensinnig rotierenden Wirbeln mit wenigstens annähernder Kreisform gesorgt wird.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in den Figurenbeschreibungen genannten und/oder in den Figuren alleine gezeigten Merkmale und Merkmalskombinationen sind nicht nur in der jeweils angegeben Kombination sondern auch in anderen Kombinationen oder in der Alleinstellung verwendbar, ohne den Rahmen der Erfindung zu verlassen. Die Figuren zeigen in:
- Fig. 1: eine schematische Darstellung eines eine Reduktionsmittelaufbereitungsstrecke bildenden Teilabschnitts des erfindungsgemäßen Abgassystems,
- Fig. 2: eine schematische Darstellung eines Abgasströmungsmusters in der Reduktionsmittelaufbereitungsstrecke nach Fig. 1,
- Fig. 3: eine schematische Darstellung einer weiteren vorteilhaften Ausführungsform eines eine Reduktionsmittelaufbereitungsstrecke bildenden Teilabschnitts des erfindungsgemäßen Abgassystems analog Fig. 1,
- Fig. 4: eine schematische Darstellung einer alternativen Ausführungsform eines eine Reduktionsmittelaufbereitungsstrecke bildenden Teilabschnitts eines Abgassystems,
- Fig. 5: vorteilhafte Ausführungsformen für Prallelemente des erfindungsgemäßen Abgassystems, und
- Fig. 6: eine Darstellung eines Teilbereichs des erfindungsgemäßen Abgassystems mit durch eine Reduktionsmittelaufbereitungsstrecke verbundenen Abgasnachbehandlungsbauteilen.

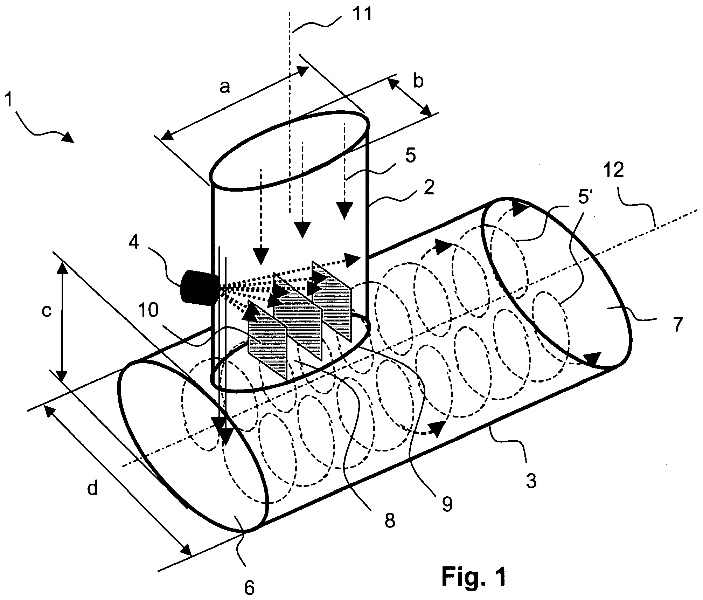

Der in Fig. 1 schematische dargestellte Teilabschnitt des erfindungsgemäßen Abgassystems bildet eine Reduktionsmittelaufbereitungstrecke 1 für in das Abgassystem einzubringendes Reduktionsmittel. Die Reduktionsmittelaufbereitungsstrecke 1 weist einen ersten zylindrischen Abgasleitungsrohrabschnitt 2 auf, welcher mit seinem auslassseitigen offenen Ende 9 in einen zweiten zylindrischen Abgasleitungsrohrabschnitt 3 einmündet. Die Einmündung ist an einer Öffnung 8 in der Zylinder-Mantelfläche des zweiten Abgasleitungsrohrabschnitts 3 angeordnet. An der Einmündung ist der erste Abgasleitungsrohrabschnitt 2 mit seinem offenen Ende 9 entlang seiner Randkontur stumpf und formschlüssig sowie stoffschlüssig mit der Randkontur der Öffnung 8 in der Zylinder-Mantelfläche des zweiten Abgasleitungsrohrabschnitts 3 verbunden.

Vorliegend weisen sowohl der Querschnitt des ersten Abgasleitungsrohrabschnitts 2 als auch der Querschnitt des zweiten Abgasleitungsrohrabschnitts 3 an der Einmündungsstelle eine ovale bzw. elliptische Form auf. Dementsprechend weist auch die Öffnung 8 eine ovale oder elliptische Form auf, wobei die längere Achse der elliptisch geformten Öffnung 8 parallel zur Zylinderachse 12 des zweiten Abgasleitungsrohrabschnitts 3 orientiert ist. Die in Richtung der Zylinderachse 12 des zweiten Abgasleitungsrohrabschnitts 3 verlaufende längere Ausdehnung a der elliptischen Öffnung 8 und damit auch des ersten Abgasleitungsrohrabschnitts 2 an der Verbindung von erstem Abgasleitungsrohrabschnitt 2 und zweitem Abgasleitungsrohrabschnitt 3 ist somit größer als die hierzu senkrecht orientierte Querausdehnung b. Das Verhältnis a/b liegt dabei bevorzugt im Bereich zwischen 1,5 und 4.

Entsprechend der wenigstens annähernd senkrechten Einmündung des ersten Abgasleitungsrohrabschnitts 2 in den zweiten Abgasleitungsrohrabschnitt 3 ist die kürzere Achse b der elliptischen Öffnung 8 bzw. des ersten Abgasleitungsrohrabschnitts 2 an der Einmündestelle wenigstens annähernd parallel zur größeren Querschnittsachse d des zweiten elliptischen Abgasleitungsrohrabschnitts 3 orientiert. Die kürzere Achse c der elliptischen Querschnittsfläche des zweiten Abgasleitungsrohrabschnitts 3 ist demnach an der Einmündestelle parallel zur Zylinderachse 11 des ersten Abgasleitungsrohrabschnitts 2 orientiert. Vorzugsweise liegt das Verhältnis d/c von längerer Querschnittsachse d und kürzerer Querschnittsachse c des zweiten Abgasleitungsrohrabschnitts 3 im Bereich zwischen 1,5 bis 2. Dabei ist die kürzere Querabmessung b der Öffnung 8 vorzugsweise kleiner als die kürzere Querschnittsachse c des zweiten Abgasleitungsrohrabschnitts 3. Für Hubraumgrößen im Bereich von etwa 1,6 Liter bis 3,5 Liter der Brennkraftmaschine wird die kürzere Querschnittsachse c vorzugsweise im Bereich von 30 mm bis 100 mm gewählt.

Abgas einer nicht dargestellten Brennkraftmaschine, insbesondere eines Dieselmotors, strömt aus einer in Fig. 1 ebenfalls nicht dargestellten Abgasreinigungseinheit, vorzugsweise einem Oxidationskatalysator, in den ersten Abgasleitungsrohrabschnitt 2 ein und durchströmt den ersten Abgasleitungsabschnitt 2. Die zur Zylinderachse 11 des ersten Abgasleitungsrohrabschnitts 2 wenigstens annähernd parallele Abgasströmungsrichtung ist dabei durch gestrichelte Pfeile 5 dargestellt. Beim Durchströmen des ersten Abgasleitungsrohrabschnitts 2 wird das Abgas mit einem Reduktionsmittel, vorzugsweise eine Lösung eines zur Abspaltung von Ammoniak befähigten Stoffs, angereichert. Nachfolgend wird ohne Einschränkung der Allgemeinheit davon ausgegangen, dass es sich bei dem Reduktionsmittel um eine wässrige Harnstofflösung, abgekürzt HWL, handelt. Die Anreicherung des Abgases mit HWL erfolgt durch Einsprühen mittels einer Injektoreinheit 4, die nahe an der Einmündung des ersten Abgasleitungsrohrabschnitts 2 in den zweiten Abgasieitungsrohrabschnitt 3 am ersten Abgasleitungsrohrabschnitt 2 angeordnet ist. Der Abstand der Injektoreinheit 4 zur Verbindungsstelle der Abgasleitungsrohrabschnitte 2, 3 ist vorzugsweise deutlich geringer als die längere Querschnittsabmessung a und besonders bevorzugt geringer als die kürzere Querschnittsabmessung b des ersten Abgasleitungsrohrabschnitts 2.

Eingesprühtes Reduktionsmittel trifft, wie durch gepunktet dargestellte Pfeile dargestellt, auf als Verdampferplatten wirkende Prallelemente 10, die über der Öffnung 8 in der Zylinder-Mantelfläche des zweiten Abgasleitungsrohrabschnitts 3 angeordnet sind. Verdampftes oder von den Verdampferplatten abprallendes flüssiges Reduktionsmittel wird von der Abgasströmung erfasst und mitgerissen. Auf Besonderheiten der Reduktionsmitteleindüsung und -Verdampfung sowie auf Ausgestaltung, Anordnung und Funktion der Prallelemente wird weiter unten genauer eingegangen.

Mit HWL versetztes Abgas strömt sodann in im Wesentlichen senkrechter Richtung in Bezug auf die Zylinderachse 12 des zweiten Abgasleitungsrohrabschnitts 3 durch die Öffnung 8 in diesen ein. In den zweiten Abgasleitungsrohrabschnitt 3 einströmendes Abgas wird durch diesen hindurchgeleitet und strömt aus einem offenen Ende 7 aus. An dem offenen Ende ist eine nicht dargestellte Abgasreinigungskomponente, vorzugsweise über einen Einlauftrichter, mit dem zweiten Abgasleitungsrohrabschnitt 3 verbunden. Bei der Abgasreinigungskomponente handelt es sich bevorzugt um ein katalytisch und/oder filtertechnisch wirksames Bauteil. Vorzugsweise ist an dem offenen Ende 7 des zweiten Abgasleitungsrohrabschnitts 3 ein Gehäuse angeschlossen, in welchem ein Partikelfilter untergebracht ist.

Gegenüberliegend zum offenen Ende 7 weist der zweite Abgasleitungsrohrabschnitt 3 ein geschlossenes Ende 6 auf. Hierfür kann beispielsweise ein ebener Verschlussdeckel angeschweißt sein. Aus dem ersten Abgasleitungsrohrabschnitt 2 durch die Öffnung 8 in der Zylinder-Mantelfläche des zweiten Abgasleitungsrohrabschnitts 3 in diesen einströmendes Abgas wird in daher in seiner Hauptströmungsrichtung um etwa 90 ° umgelenkt. Es ist vorzugsweise vorgesehen, dass das in Bezug auf die umgelenkte Hauptströmungsrichtung des Abgases stromaufwärtige Ende der Öffnung 8 unmittelbar an das geschlossene Ende 6 angrenzt oder zumindest nahe zu diesem angeordnet ist. Dadurch wird die Ausbildung einer strömungsmäßigen Totzone am geschlossenen Ende 6 des zweiten Abgasleitungsrohrabschnitts 3 vermieden.

In den zweiten Abgasleitungsrohrabschnitt 3 einströmendes Abgas trifft auf einen der Öffnung 8 gegenüberliegenden Bereich der Innenwand des zweiten Abgasleitungsrohrabschnitts 3 auf und wird umgelenkt. Dabei entstehen insbesondere infolge der elliptischen Rohrquerschnittsform zwei gegensinnig rotierende Wirbel, wie durch die gestrichelten Pfeile 5' dargestellt. Die Ausbildung von zwei gegensinnig rotierenden Abgaswirbeln hat sich als ganz besonders vorteilhaft in Bezug auf die Aufbereitung des Reduktionsmittels erwiesen. Einerseits wird eine Gleichverteilung von flüssigem, dabei gegebenenfalls überwiegend in Form von kleinen Tröpfchen vorliegendem Reduktionsmittel, und besonders von bereits verdampftem Reduktionsmittel verbessert. Andererseits wird durch die Verwirbelung die Verdampfung von HWL entscheidend verbessert. Und schließlich wird eine Freisetzung von Ammoniak durch Thermolyse und/oder Hydrolyse verbessert. Weiterhin erfolgt durch das Auftreffen des Abgases auf die der Öffnung 8 gegenüberliegende Rohrinnenwand ein weiteres Aufbrechen von im Abgas vorhandenen Tröpfchen, wodurch deren nachfolgende Verdampfung erleichtert ist. Soweit eine Benetzung der Rohrinnenwand auftritt, wirkt die benetzte Rohrfläche außerdem als Verdampferfläche, wodurch die Verdampfung der HWL weiter verbessert ist.

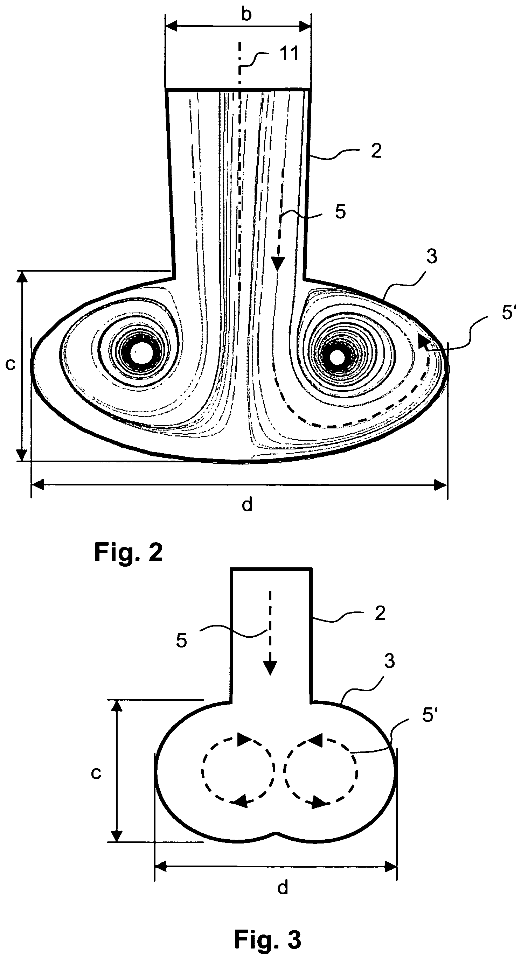

Zur Verdeutlichung der Doppelwirbelausbildung ist in Fig. 2 ein Strömungsbild, erhalten aus einer rechnerischen Strömungssimulation, dargestellt. Das Strömungsbild zeigt Strömungsfäden in einer Draufsicht auf einen Ausschnitt der Reduktionsmittelaufbereitungsstrecke 1 in Richtung der Zylinderachse 12 des zweiten Abgasleitungsrohrabschnitts 3. Wie zu erkennen, bilden sich im zweiten Abgasleitungsrohrabschnitt 3 zwei gegenläufig annähernd um einen jeweiligen Brennpunkt der elliptischen Querschnittsfläche rotierende Wirbelströmungen aus, welche sich mit abnehmendem Durchmesser immer mehr einer idealen Kreisform annähern. Wie von den Erfindern festgestellt wurde, ist es mit Blick auf eine anzustrebende Stabilität der Wirbel vorteilhaft, wenn die Wirbel annähernd kreisförmig ausgebildet sind. Dies kann insbesondere dadurch erreicht werden, dass die längere Achse d der elliptischen Querschnittsfläche des zweiten Abgasleitungsrohrabschnitts 3 etwa doppelt so groß ist wie die kürzere Achse c. Wie in Fig. 2 dargestellt, kann auch vorgesehen sein, dass sich die kürzere Querschnittsabmessung b des ersten Abgasleitungsrohrabschnitts 2 mit zunehmender Entfernung von der Verbindungsstelle der beiden Abgasleitungsrohrabschnitte 2, 3 vergrößert. Auf diese Weise kann ein kontinuierlicher Übergang auf die größeren Abmessungen eines gegebenenfalls vorgesehenen Einlauftrichters für ein angeschlossenes Abgasreinigungselement erzielt werden. Analog gilt dies natürlich auch für die anderen Querschnittsabmessungen a, c und d.

Zur Ausbildung von an eine Kreisform möglichst gut angenäherten Abgaswirbeln kann auch eine Querschnittsform des zweiten Abgasleitungsrohrabschnitts 3 gewählt werden, welche zwei aneinandergesetzten Kreissegmenten entspricht, wie dies grob schematisch in Fig. 3 dargestellt ist. Generell werden die Querschnittsabmessungen der Abgasleitungsrohrabschnitte 2, 3 so gewählt, dass sich in Verbindung mit den vorherrschenden Abgasmassenströmen im zweiten Abgasleitungsrohrabschnitt 3 ein Doppelwirbel ausbildet, der entlang einer Leitungslänge von mehr als 200 mm, vorzugsweise von mehr als 300 mm wenigstens annähernd erhalten bleibt. Jedenfalls ist vorzugsweise eine Aufrechterhaltung eines Doppelwirbels bis zum Erreichen eines nachgeschalteten Abgasreinigungselements oder eines hierfür vorgesehenen Abgaseinlauftrichters vorgesehen. Für ein möglichst spätes Aufbrechen der erzeugten Wirbelstruktur ist es vorgesehen, die Querschnittsabmessungen so wählen, dass zumindest im Bereich des Abgaseinlasses im zweiten Abgasleitungsrohrabschnitt 3 eine Drallzahl des Abgases von wenigstens 0,3 jeden Einzelwirbels erreicht wird. Insbesondere kann es vorgesehen sein, die Querschnittsabmessungen a, b, c, d der Abgasleitungsrohrabschnitte 2, 3 in Abhängigkeit des Hubraums der Brennkraftmaschine so auszuführen, dass eine Einlassdrallzahl von wenigstens 0,3 erreicht wird.

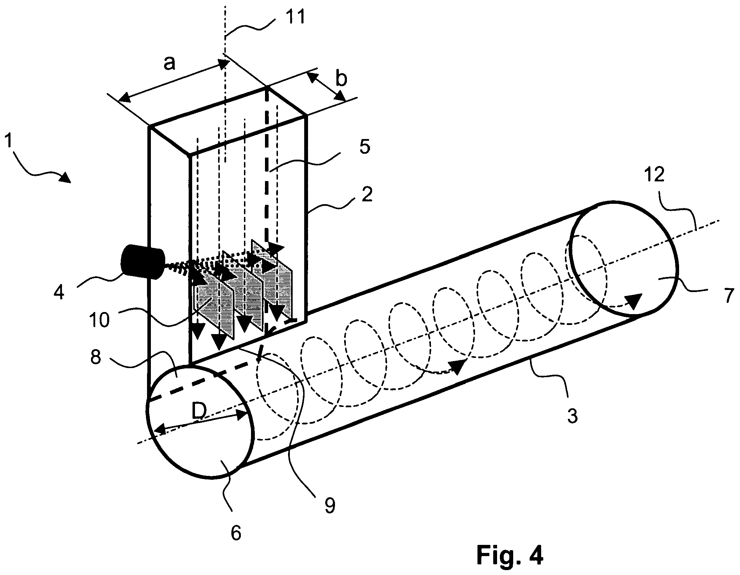

Die Vorteile der oben erläuterten Ausführungsformen der Reduktionsmittelaufbereitungsstrecke 1 lassen sich gegebenenfalls auch mit abgewandelten Querschnittsformen der Abgasleitungsrohrabschnitte 2, 3 und mit veränderten Querschnittsgeometrien sowie veränderten Strömungsverhältnissen erzielen. Dabei ist es jedoch erforderlich, die Drall erzeugenden Eigenschaften im Wesentlichen beizubehalten. Eine in diesem Sinne ebenfalls denkbare alternative Ausführungsform eines eine Reduktionsmittelaufbereitungsstrecke bildenden Teilabschnitts ist in Fig. 4 dargestellt, wobei nachfolgend lediglich auf die wesentlichen Unterschiede gegenüber den oben erläuterten Ausführungsformen eingegangen wird.

Die in Fig. 4 dargestellte Ausführungsform einer Reduktionsmittelaufbereitungsstrecke 1 eines Abgassystems unterscheidet sich von der in Fig. 1 dargestellten Ausführungsform im Wesentlichen durch eine tangentiale Abgaszuführung vom ersten Abgasieitungsrohrabschnitt 2 in den zweiten Abgasleitungsrohrabschnitt 3. Hierfür ist der erste Abgasleitungsrohrabschnitt 2 außermittig in Bezug auf den zweiten Abgasleitungsrohrabschnitt 3 angesetzt. In den zweiten Abgasleitungsrohrabschnitt 3 einströmendes Abgas ist somit nicht auf einen zentralen Bereich der Querschnittsfläche des zweiten Abgasleitungsrohrabschnitts 3 gerichtet, sondern auf einen dezentralen Bereich. Mit HWL angereichertes Abgas strömt somit annähernd tangential in Bezug auf den zweiten Abgasleitungsrohrabschnitt 3 in diesen ein.

Der zweite Abgasleitungsrohrabschnitt 3 weist in dieser Ausführungsform einen kreisrunden Querschnitt auf, weshalb anstelle eines Doppelwirbels wie dargestellt ein Einfachwirbel ausgebildet wird. Der Durchmesser D des zweiten Abgasleitungsrohrabschnitts 3 liegt bevorzugt im Bereich der Querschnittsabmessungen c und d der in Fig. 1 dargestellten elliptischen Ausführungsform. Für typische PKW-Motorgrößen liegt er vorzugsweise im Bereich zwischen 30 mm bis 150 mm.

Weiterhin ist die Querschnittsform des ersten Abgasleitungsrohrabschnitts vorliegend rechteckig gewählt. Dabei gelten weiterhin die zur Ausführungsform von Fig. 1 gemachten Abmessungsangaben sowie die Angaben zur Wirbelstärke des sich im zweiten Abgasleitungsabschnitt 3 ausbildenden Abgaswirbels. Die längere Seite a des Querschnitts des ersten Abgasleitungsrohrabschnitts 2 an der Verbindungsstelle der Abgasleitungsrohrabschnitte 2, 3 wird vorzugsweise wenigstens so groß wie der Durchmesser D des zweiten Abgasleitungsrohrabschnitts gewählt. Besonders bevorzugt wird das Verhältnis a/D im Bereich 1,5 bis 3 gewählt. Es versteht sich, dass auch bei der Ausführungsform von Fig. 1 ein rechteckiger Querschnitt des ersten Abgasleitungsrohrabschnitts vorgesehen sein kann.

Nachfolgend wird auf die erfindungsgemäß vorgesehene Verdampfereinrichtung eingegangen, welche stromaufwärts von der Verbindungsstelle von erstem Abgasleitungsrohrabschnitt 2 und zweitem Abgasleitungsrohrabschnitt 3 vorgesehen ist. Hierzu wird auf Fig. 1 Bezug genommen, wobei die Erläuterungen gleichermaßen auf die in Fig. 4 dargestellte Ausführungsform der Reduktionsmittelaufbereitungsstrecke 1 gelten.

Die Verdampfereinrichtung weist wenigstens eine, vorzugsweise jedoch bis zu 8 Prallelemente 10 auf. Lediglich beispielhaft sind in Fig. 1 drei Prallelemente 10 dargestellt. Die auch als Verdampferplatten fungierenden Prallelemente 10 sind als ebene Bleche ausgebildet, deren Normalenrichtung wenigstens annähernd senkrecht zur Zylinderachse 11 des ersten Abgasleitungsrohrabschnitts 2 und damit zur Abgasströmungsrichtung ausgerichtet ist. Vorzugsweise sind die Prallelemente 10 äquidistant zueinander angeordnet. Infolge dieser strömungsgünstigen Orientierung wird von den Prallelementen 10 kein oder allenfalls ein vernachlässigbarer Strömungswiderstand verursacht. Ein stromabwärtiges Ende der Prallelemente 10 liegt vorzugsweise in der Ebene der Öffnung 8 in der Zylinder-Mantelfläche des zweiten Abgasleitungsrohrabschnitts 3 oder nur wenige mm weiter gegen die Abgasströmungsrichtung versetzt. Ein stromaufwärtiges Ende der Prallelemente 10 befindet sich im Wesentlichen auf der Höhe der am ersten Abgasleitungsrohrabschnitt 2 angeordneten Injektoreinheit 4. Dabei ist die Injektoreinheit 4 so angeordnet, dass sie etwa senkrecht zur Zylinderachse 11 HWL absprühen kann. Eine geringe Neigung der Absprührichtung in Abgasströmungsrichtung kann jedoch vorgesehen sein. Von der Injektoreinheit 4 abgesprühte HWL trifft somit annähernd senkrecht, allenfalls jedoch in einem spitzen Winkel in Bezug auf die Normalenrichtung der Prallelementebenen auf die Prallelemente 10 auf.

Auf die Prallelemente 10 auftreffende HWL-Tröpfchen prallen je nach Temperatur der Prallelemente 10 wieder von diesen ab oder benetzen deren Oberfläche mit einer nachfolgenden Verdampfung. Beide Vorgänge unterstützen eine Verteilung von HWL im Abgas. Ein Abprallen von auf die Prallelemente 10 auftreffenden Tröpfchen erfolgt hauptsächlich, wenn die Prallelemente 10 eine Temperatur oberhalb der Leidenfrosttemperatur aufweisen. Dabei hat es sich gezeigt, dass die Größe von abprallenden Tröpfchen im Vergleich zu aufprallenden Tröpfchen verringert und damit deren Verteilung verbessert ist. Beim Weitertransport des mit HWL angereicherten Abgases erfolgt zudem ein weiteres Aufprallen der Tröpfchen auf die der Öffnung 8 im zweiten Abgasleitungsrohrabschnitt 3 gegenüberliegenden Rohrinnenwand. Dabei erfolgt ein abermaliges Abprallen mit weiterer Tröpfchenverkleinerung bzw. eine Verdampfung eines weiteren Anteils der dem Abgas zugeführten HWL.

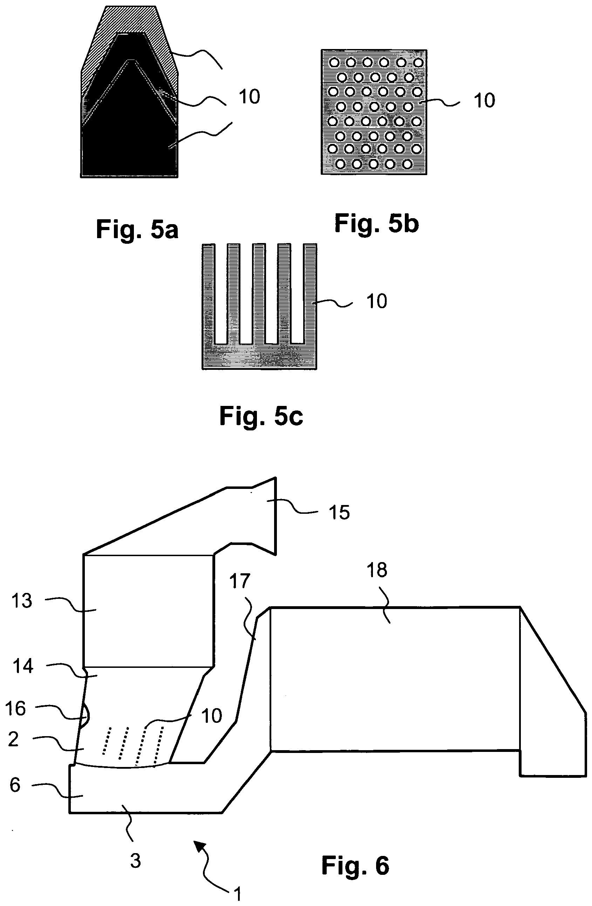

Um die Aufbereitung von HWL an den Prallelementen 10 möglichst optimal zu gestalten, sind die Prallelemente so ausgestaltet bzw. in Bezug auf die Absprührichtung der Injektoreinheit 4 angeordnet, dass alle Prallelemente 10 und vorzugsweise auch die der Injektoreinheit 4 gegenüberliegende Innenwand des ersten Abgasleitungsrohrabschnitts 2 wenigstens teilweise vom Sprühstrahl bzw. Sprühkegel erfasst und benetzt werden. Hierfür ist es vorteilhaft, die Prallelemente 10 in Abgasströmungsrichtung gesehen derart versetzt zueinander anzuordnen, dass deren stromaufwärtiges und/oder stromabwärtiges Ende in zunehmender Entfernung der Prallelemente 10 von der Injektoreinheit 4 zunehmend in Bezug auf die Abgasströmungsrichtung verschoben ist. Es kann mit zunehmendem Abstand von der Injektoreinheit 4 eine zunehmende Länge der Prallelemente, d.h. ein zunehmende Ausdehnung der Prallelemente 10 in und/oder entgegen der Abgasströmungsrichtung vorgesehen sein. Ein Beispiel für eine solche vorteilhafte Staffelung ist in Fig. 5a schematisch dargestellt. Dabei kann es, wie in Fig. 5a gezeigt, vorgesehen sein, dass die Flächengröße der Prallelemente 10 mit zunehmender Entfernung der Prallelemente 10 von der Injektoreinheit 4 ebenfalls zunimmt. Auf diese Weise ist der Anteil der abgesprühten HWL, welcher auf die von der Injektoreinheit 4 weiter entfernten Prallelemente 10 auftrifft, vergrößert und damit die Aufbereitungswirkung insbesondere dieser "hinteren" Prallelemente 10 verbessert. Wie in Fig. 5a dargestellt, kann auch eine sich in oder entgegen der Abgasströmungsrichtung vergrößernde Breite der Prallelemente 10 wenigstens bereichsweise vorgesehen sein. In Bezug auf die erfindungsgemäß vor einer Abgasverwirbelung vorgesehene, durch die Prallelemente 10 maßgeblich unterstützte Verdampfung eingedüster HWL ist noch darauf hinzuweisen, dass es bevorzugt vorgesehen ist, dass auch die der Injektoreinheit 4 gegenüberliegende Innenwand des ersten Abgasleitungsrohrabschnitts 2 vom Sprühstrahl bzw. Sprühkegel erfasst und benetzt wird. Die benetzte Fläche der Rohrinnenwand wirkt so als zusätzliche Verdampferfläche, wobei auch hier ein Abprallen von auftreffenden Flüssigkeitströpfchen erfolgen kann.

Eine weitere Verbesserung der Verdampferwirkung der Prallelemente 10 lässt sich erzielen, wenn deren Oberfläche Durchbrechnungen aufweist. In Fig. 5b ist beispielhaft eine gelochte Ausführungsform dargestellt. Fig. 5c zeigt schematisch eine geschlitzte Form. Dabei ist es vorteilhaft, wenn die Durchbrechungen der Prallelementefläche etwa 5 % bis etwa 50 % der Bruttogesamtfläche ausmacht. Ferner kann ein Oberflächenformung der Prallelemente etwa in Form von Noppen vorgesehen sein. Zusätzlich oder alternativ kann eine Aufrauung und/oder eine Beschichtung vorgesehen sein. Ein bevorzugter Wert für eine Oberflächenrauhigkeit liegt im Bereich von 5 µm bis 50 µm. Als Beschichtung kann eine katalytische Beschichtung zur Unterstützung einer Thermolyse und/oder Hydrolyse von Harnstoff vorgesehen sein. Es kann auch eine Beschichtung vorgesehen sein, welche zusätzlich oder alternativ einer Belagsbildung in Bezug auf Ablagerung von Harnstoff-Zersetzungsprodukten entgegen wirkt.

Die Reduktionsmittelaufbereitungsstrecke 1 ermöglicht, insbesondere durch synergistisches Zusammenwirken von Versprühen und Verdampfung mit nachfolgender Strömungsrichtungsumlenkung in Verbindung mit Wirbelbildung, eine äußerst effektive Reduktionsmittelaufbereitung. Bei Verwendung von HWL als Reduktionsmittel wird eine effektive Freisetzung von Ammoniak bei gleichzeitig besonders guter Gleichverteilung mit kurzen Leitungslängen erzielt. Weiterhin zeichnet sich die Reduktionsmittelaufbereitungsstrecke 1 durch einen besonders niedrigen Strömungswiderstand aus. Auf ein zusätzliches Einbauelement zur Vermischung oder Drallerzeugung, wie beispielsweise einen statischen Mischer vor und insbesondere nach der HWL-Zuführung ins Abgas, kann verzichtet werden. Die wie dargestellt und beschrieben ausgebildete Reduktionsmittelaufbereitungsstrecke 1 ermöglicht daher eine besonders kompakte Ausführung des erfindungsgemäßen Abgassystems, auch bei komplexem Aufbau. Deshalb können auch komplex aufgebaute Abgassystem komplett oder zumindest größtenteils in Bezug auf abgasreinigungswirksame Komponenten in einem Fahrzeug-Motorraum untergebracht werden. Insbesondere ist eine Anordnung seitlich am Motorblock im Motorraum ermöglicht, wodurch wiederum Vorteile in Bezug auf die thermische Eigenschaften des Abgasreinigungssystems erzielt werden können. Nachfolgend wird dies anhand von Fig. 6 veranschaulicht.

In Fig. 6 ist ein kompaktes Abgasnachbehandlungssystem dargestellt, bei welchem zwei Gehäuse13, 18 für Abgasnachbehandlungskomponenten über die Reduktionsmittelaufbereitungsstrecke 1 miteinander verbunden sind. In einem stromaufwärtigen Gehäuse 13 ist vorliegend ein Oxidationskatalysator angeordnet. In einem stromabwärtigen Gehäuse 18 sind vorliegend hintereinander ein Partikelfilter und mit geringem Abstand hierzu ein SCR-Katalysator angeordnet, wobei der Partikelfilter vorzugsweise mit einer SCR-Katalysatorbeschichtung versehen ist. Ein Abgaseinlasstrichter 15 des stromaufwärtigen Gehäuses 13 empfängt Abgas eines nicht dargestellten Dieselmotors und ist hierfür vorzugsweise mit einem ebenfalls nicht dargestellten Abgasturbolader-Auslass verbunden. Aus dem Gehäuse 13 wird durch den Oxidationskatalysator behandeltes Abgas über einen Gehäuseauslasstrichter 14 dem ersten Abgasleitungsrohrabschnitt 2 der Reduktionsmittelaufbereitungsstrecke 1 zugeführt. In den ersten Abgasleitungsrohrabschnitt 2 wird mittels einer in Fig. 6 nicht dargestellten Injektoreinheit, die an einem Anschluss 16 vorgesehen ist, HWL ins Abgas eingedüst. Infolge der oben beschriebenen besonders wirksamen Aufbereitung kann die Zuleitung von harnstoffhaltigem bzw. ammoniakhaltigen Abgas zum Gehäuse 18 besonders kurz ausgeführt werden. Wie ersichtlich, ermöglicht die beschriebene Abgasumlenkung um etwa 90 ° beim Übergang des ersten Abgasleitungsrohrabschnitts 2 zum zweiten Abgasleitungsrohrabschnitt 3 eine besonders kompakte Bauform des Abgasnachbehandlungssystems. Wärme- und Druckverluste sind minimiert, was eine besonders effiziente Abgasreinigung ermöglicht. Als besonders vorteilhaft und kompakt hat sich eine Ausbildung des erfindungsgemäßen Abgassystems erwiesen, bei welcher wie in Fig. 6 dargestellt, das stromaufwärtige Gehäuse 13 wenigstens annähernd senkrecht orientiert ist und das unmittelbar nachgeschaltete und über die Reduktionsmittelaufbereitungsstrecke 1 mit dem Gehäuse 13 verbundene stromabwärtige Gehäuse 18 wenigstens annähern waagrecht orientiert angeordnet ist. Insbesondere ist eine Anordnung besonders kompakt und Platz sparend, bei welcher das stromabwärtige Gehäuse 18 wenigstens teilweise in derselben geodätischer Höhe wie das stromaufwärtige Gehäuse 13 angeordnet ist. Besonders bevorzugt ist es, wenn die Mittelachse des Gehäuses 18 geodätisch wenigstens annähernd so hoch oder sogar höher als das stromabwärtige Ende des Gehäuses 13 angeordnet ist.

## Patentansprüche

1. Abgassystem einer Brennkraftmaschine welches zur Abgasführung einen ersten zylindrischen Abgasieitungsrohrabschnitt (2) und einen zweiten zylindrischen Abgasleitungsrohrabschnitt (3) aufweist, wobei
- an dem ersten Abgasleitungsrohrabschnitt (2) eine Injektoreinheit (4) zur Einbringung eines Reduktionsmittels in durch den ersten Abgasleitungsrohrabschnitt (2) strömendes Abgas angeordnet ist,
- der zweite Abgasleitungsrohrabschnitt (3) eine Zylinder-Mantelfläche, ein geschlossenes erstes Ende (6) und ein offenes zweites Ende (7) sowie eine Öffnung (8) in der Zylinder-Mantelfläche angrenzend an das geschlossene Ende (6) aufweist,
- ein offenes Ende (9) des ersten Abgasleitungsrohrabschnitts (2) derart formschlüssig mit dem zweiten Abgasleitungsrohrabschnitt (3) verbunden ist, dass aus dem offenen Ende (9) des ersten Abgasleitungsrohrabschnitts (2) ausströmendes Abgas in wenigstens annähernd senkrechter Richtung in Bezug auf eine Längserstreckung des zweiten Abgasleitungsrohrabschnitts (3) durch die Öffnung (8) in der Zylinder-Mantelfläche des zweiten Abgasleitungsrohrabschnitts (3) in den zweiten Abgasleitungsrohrabschnitt (3) einströmen kann,
**dadurch gekennzeichnet, dass**
- die Richtung der Zylinderachse (12) des zweiten Abgasleitungsrohrabschnitts (3) verlaufende Ausdehnung (a) des ersten Abgasleitungsrohrabschnitts (2) 1,5 bis 4 mal größer ist als die hierzu senkrecht orientierte Querausdehnung
- eine Zylinderachse (11) des ersten Abgasrohrleitungsabschnitts (2) im Bereich der Verbindungsstelle mit dem zweiten Abgasrohrleitungsabschnitt (3) auf einen Zentrumsbereich einer Querschnittsfläche des zweiten Abgasrohrleitungsabschnitts (3) gerichtet ist, und
- einer in dem ersten Abgasleitungsrohrabschnitt (2) angeordneten Verdampfereinrichtung (10).

2. Abgassystem nach Anspruch 1,
**dadurch gekennzeichnet,**
**dass** die Injektoreinheit (4) in einer Entfernung stromauf von der Verbindungsstelle des ersten Abgasleitungsrohrabschnitts (2) mit dem zweiten Abgasleitungsrohrabschnitt (3) angeordnet ist, welche weniger als ein Durchmesser des ersten Abgasleitungsrohrabschnitts (2) oder des zweiten Abgasleitungsrohrabschnitts (3) beträgt.

3. Abgassystem nach Anspruch 1 oder 2,
**dadurch gekennzeichnet,**
**dass** die Verdampfungseinrichtung (10) in einer Entfernung stromauf von der Verbindungsstelle des ersten Abgasleitungsrohrabschnitts (2) mit dem zweiten Abgasleitungsrohrabschnitt (3), welche weniger als ein Durchmesser des ersten Abgasleitungsrohrabschnitts (2) oder des zweiten Abgasleitungsrohrabschnitts (3) beträgt, angeordnet ist und wenigstens ein plattenförmiges Prallelement aufweist, auf welchem mittels der Injektoreinheit (4) in den ersten Abgasleitungsrohrabschnitt (2) eingebrachtes Reduktionsmittel aufprallt.

4. Abgassystem nach Anspruch 3,
**dadurch gekennzeichnet,**
**dass** das wenigstens eine Prallelement direkt über oder vor der Öffnung (8) in der Zylinder-Mantelfläche des zweiten Abgasleitungsrohrabschnitts (3) angeordnet ist.

5. Abgassystem nach Anspruch 3 oder 4,
**dadurch gekennzeichnet,**
**dass** das wenigstens eine Prallelement wenigstens annähernd eben ausgebildet ist, wobei ein Normalenvektor der Prallelementebene wenigstens annähernd senkrecht zur Abgasströmungsrichtung orientiert ist.

6. Abgassystem nach einem der Ansprüche 3 bis 5,
**dadurch gekennzeichnet,**
**dass** eine Mehrzahl von Prallelementen vorgesehen ist.

7. Abgassystem nach Anspruch 6,
**dadurch gekennzeichnet,**
**dass** eine flächenmäßige Ausdehnung der Prallelemente unterschiedlich gewählt ist.

8. Abgassystem nach Anspruch 1 bis 7,
**dadurch gekennzeichnet,**
**dass** der zweite Abgasleitungsrohrabschnitt (3) im Bereich der Öffnung (8) in der Zylinder-Mantelfläche eine ovale Querschnittsform aufweist.

9. Verfahren zur Aufbereitung eines in einen ersten Abgasleitungsrohrabschnitt (2) eines Abgassystems einer Brennkraftmaschine gemäß der Ansprüche 1 bis 8 eingebrachten Reduktionsmittels, bei welchem das eingebrachte Reduktionsmittel an einer in dem ersten Abgasleitungsrohrabschnitt (2) angeordneten Verdampfereinrichtung (10) wenigstens teilweise verdampft und anschließend zusammen mit dem Abgas der Brennkraftmaschine in einer Richtung durch eine Öffnung (8) in einer Zylinder-Mantelfläche eines zweiten Abgasleitungsrohrabschnitts (3) in den zweiten Abgasleitungsrohrabschnitt (3) einströmt, die wenigstens annähernd senkrecht zu einer axialen Richtung des zweiten Abgasleitungsrohrabschnitts (3) orientiert ist, wobei das in den zweiten Abgasleitungsrohrabschnitt (3) einströmende Abgas zwei in Bezug auf eine axiale Richtung des zweiten Abgasleitungsrohrabschnitts (3) gesehen gegensinnig rotierende Wirbel ausbildet.

10. Verfahren nach Anspruch 9,
**dadurch gekennzeichnet,**
**dass** für die zwei Wirbel zumindest im Abgaseinströmbereich im zweiten Abgasleitungsrohrabschnitt (3) eine Drallzahl des Abgases von wenigstens 0,3 erreicht wird.

11. Verfahren nach Anspruch 9 oder 10,
**dadurch gekennzeichnet,**
**dass** als Verdampfereinrichtung (10) eine Mehrzahl von Verdampferplatten vorgesehen ist und das Reduktionsmittel derart in den ersten Abgasleitungsrohrabschnitt (2) eingedüst wird, dass es auf alle Verdampferplatten aufprallt.

12. Verfahren nach Anspruch 11,
**dadurch gekennzeichnet,**
**dass** das Reduktionsmittel in einem höchstens spitzen Winkel in Bezug auf eine Normalenrichtung der Verdampferplatten in den ersten Abgasleitungsrohrabschnitt (2) eingespritzt wird.

13. Verfahren nach Anspruch 9 oder 10,
**dadurch gekennzeichnet,**
**dass** das Reduktionsmittel wenigstens annähernd senkrecht in Bezug auf eine Abgasströmung in den ersten Abgasleitungsrohrabschnitt (2) eingespritzt wird.

## Claims

1. Exhaust system of an internal combustion engine, the system comprising a first cylindrical exhaust pipe section (2) and a second cylindrical exhaust pipe section (3) for carrying exhaust gas, wherein
- on the first exhaust pipe section (2) there is located an injector unit (4) for introducing a reducing agent into the exhaust gas flowing through the first exhaust pipe section (2),
- the second exhaust pipe section (3) has a cylindrical outer surface, a closed first end (6) and an open second end (7) as well as an opening (8) in the cylindrical outer surface adjacent to the closed end (6),
- an open end (9) of the first exhaust pipe section (2) is positively connected to the second exhaust pipe section (3) in such a way that exhaust gas flowing from the open end of the first exhaust pipe section (2) can flow through the opening (8) in the cylindrical outer surface of the second exhaust pipe section (3) into the second exhaust pipe section (3) in a direction which is at least approximately perpendicular to a longitudinal dimension of the second exhaust pipe section (3),
**characterised in that**
- the dimension (a) of the first exhaust pipe section (2) extending in the direction of the cylinder axis of the second exhaust pipe section (3) is 1.5 to 4 times greater than the transverse dimension oriented perpendicularly thereto,
- a cylinder axis (11) of the first exhaust pipe section (2) is oriented towards a centre region of a cross-sectional area of the second exhaust pipe section (3) in the region of the connecting point with the second exhaust pipe section (3), and
- an evaporator device (10) located in the first exhaust pipe section (2).

2. Exhaust system according to claim 1,
**characterised in that**
the injector unit (4) is located upstream of the connection point between the first exhaust pipe section (2) and the second exhaust pipe section (3) at a distance which is less than a diameter of the first exhaust pipe section (2) or the second exhaust pipe section (3).

3. Exhaust system according to claim 1 or 2,
**characterised in that**
the evaporator device (10) is located upstream of the connection point between the first exhaust pipe section (2) and the second exhaust pipe section (3) at a distance which is less than a diameter of the first exhaust pipe section (2) or the second exhaust pipe section (3), and comprises at least one plate-shaped baffle element on which the reducing agent introduced into the first exhaust pipe section (2) by means of the injector unit (4) impinges.

4. Exhaust system according to claim 3,
**characterised in that**
the at least one baffle element is located directly above or in front of the opening (8) in the cylindrical outer surface of the second exhaust pipe section (3).

5. Exhaust system according to claim 3 or 4,
**characterised in that**
the at least one baffle element is designed to be at least approximately flat, a normal vector of the baffle element plane being oriented at least approximately perpendicularly to the exhaust gas flow direction.

6. Exhaust system according to any of claims 3 to 5,
**characterised in that**
a plurality of baffle elements is provided.

7. Exhaust system according to claim 6,
**characterised in that**
a surface dimension of the baffle elements is chosen to be different.

8. Exhaust system according to any of claims 1 to 7,
**characterised in that**
the second exhaust pipe section (3) has an oval cross-sectional shape in the region of the opening (8) in the cylindrical outer surface.

9. Method for preparing a reducing agent introduced into a first exhaust pipe section (2) of an exhaust system of an internal combustion engine according to any of claims 1 to 8, wherein the introduced reducing agent at least partially evaporates at an evaporator device (10) located in the first exhaust pipe section (2) and then flows together with the exhaust gas of the internal combustion engine in one direction through an opening (8) in a cylindrical outer surface of a second exhaust pipe section (3) into the second exhaust pipe section (3), which opening is oriented at least approximately perpendicularly to an axial direction of the second exhaust pipe section (3), wherein the exhaust gas flowing into the second exhaust pipe section (3) forms two eddies rotating in opposite directions as viewed relative to an axial direction of the second exhaust pipe section (3).

10. Method according to claim 9,
**characterised in that**
for the two eddies an exhaust gas swirl number of at least 0.3 is reached at least in the exhaust gas inflow region in the second exhaust pipe section (3).

11. Method according to claim 9 or 10,
**characterised in that**
a plurality of evaporator plates is provided as an evaporator device (10), and **in that** the reducing agent is jetted into the first exhaust pipe section (2) in such a way that it impinges on the evaporator plates.

12. Method according to claim 11,
**characterised in that**
the reducing agent is injected into the first exhaust pipe section (2) at most at an acute angle relative to a normal direction of the evaporator plates.

13. Method according to claim 9 or 10,
**characterised in that**
the reducing agent is injected into the first exhaust pipe section (2) at least approximately perpendicularly relative to an exhaust gas flow.

## Revendications

1. Système d'échappement d'un moteur à combustion interne qui, pour guider le gaz d'échappement, présente une première partie cylindrique (2) de conduite d'échappement et une seconde partie cylindrique (3) de conduite d'échappement,
- est disposée sur la première partie (2) de conduite d'échappement, une unité d'injecteur (4) servant à introduire un moyen réducteur dans le gaz d'échappement s'écoulant à travers la première partie (2) de conduite d'échappement,
- la seconde partie (3) de conduite d'échappement présentant une surface externe de cylindre, une première extrémité fermée (6) et une seconde extrémité ouverte (7) ainsi qu'un orifice dans la surface externe de cylindre adjacente à l'extrémité fermée (6),
- une extrémité ouverte (6) de la première partie (2) de conduite d'échappement étant reliée par complémentarité de forme à la seconde partie (3) de conduite d'échappement de sorte que le gaz d'échappement s'écoulant à partir de l'extrémité ouverte (9) de la première partie (2) de conduite d'échappement dans au moins un sens approximativement vertical à l'étendue longitudinale de la seconde partie (3) de conduite d'échappement puisse s'écouler par l'orifice (8) dans la surface externe de cylindre de la seconde partie (3) de conduite d'échappement dans la seconde partie (3) de conduite d'échappement, **caractérisé en ce que**
- la dilatation (a) de la première partie (2) de conduite d'échappement est supérieure entre 1,5 et 4 fois à la dilatation transversale orientée verticalement à celle-ci,
- un axe (11) de cylindre de la première partie (2) de conduite d'échappement dans la zone du point de raccordement avec la seconde partie (3) de conduite d'échappement est orienté dans une zone centrale d'une surface de section transversale de la seconde partie (3) de conduite d'échappement, et
- d'un dispositif évaporateur (10) disposé dans la première partie (2) de conduite d'échappement.

2. Système d'échappement selon la revendication 1, **caractérisé en ce que** l'unité d'injecteur (4) est disposé à une distance en amont du point de raccordement de la première partie (2) de conduite d'échappement avec la seconde parte (3) de conduite d'échappement qui est inférieure à un diamètre de la première partie (2) de conduite d'échappement ou de la seconde partie (3) d'échappement.

3. Système d'échappement selon la revendication 1 ou la revendication 2, **caractérisé en ce que** le dispositif évaporateur (10) est disposé à une distance en amont du point de raccordement de la première partie (2) de conduite d'échappement avec la seconde partie (3) de conduite d'échappement qui est inférieure à un diamètre de la première partie (2) de conduite d'échappement ou de la seconde partie (3) de conduite d'échappement et présente au moins un élément d'impact tabulaire sur lequel l'agent réducteur introduit dans la première partie (2) de conduite d'échappement est injecté au moyen de l'unité d'injecteur (4).

4. Système d'échappement selon la revendication 3, **caractérisé en ce que** l'au moins un élément d'impact est disposé directement au-dessus de l'orifice (8) ou devant celui-ci sur la surface externe de cylindre de la seconde partie (3) de conduite d'échappement.

5. Système d'échappement selon la revendication 3 ou la revendication 4, **caractérisé en ce que** l'au moins un élément d'impact est de forme approximativement plate, une normale à une surface du plan d'élément d'impact est orienté au moins approximativement verticalement à la direction d'écoulement des gaz d'échappement.

6. Système d'échappement selon l'une quelconque des revendications 3 à 5, **caractérisé en ce qu'**il est prévu une pluralité d'éléments d'impact.

7. Système d'échappement selon la revendication 6, **caractérisé en ce qu'**une dilatation des éléments d'impact est différentiée par la surface.

8. Système d'échappement selon la revendication 1 à 7, **caractérisé en ce que** la seconde partie (3) de conduite d'échappement présente dans la zone de l'orifice (8) sur la surface externe de cylindre une forme de section transversale ovale.

9. Procédé de traitement d'un agent réducteur introduit dans une première partie (2) de conduite d'échappement d'un système d'échappement d'un moteur à combustion interne selon la revendication 1 à 8, selon lequel l'agent réducteur introduit s'évapore au moins partiellement dans un dispositif évaporateur disposé dans la première partie (2) de conduite d'échappement et ensuite s'écoule conjointement avec le gaz d'échappement du moteur à combustion interne dans une direction à travers l'orifice (8) sur une surface externe de cylindre d'une seconde partie (3) de conduite d'échappement, qui est orientée au moins approximativement verticalement à une direction axiale de la seconde partie (3) de conduite d'échappement, le gaz d'échappement s'écoulant dans la seconde partie (3) de conduite d'échappement formant deux tourbillons tournant en sens contrainte lorsqu'ils sont observés par rapport à une direction axiale de la seconde partie (3) de conduite d'échappement.

10. Procédé selon la revendication 9, **caractérisé en ce que** pour les deux tourbillons au moins dans la zone d'écoulement de gaz d'échappement dans la seconde partie (3) de conduite d'échappement on atteint un nombre de tourbillons longitudinaux des gaz d'échappement d'au moins 0,3.

11. Procédé selon la revendication 9 ou la revendication 10, **caractérisé en ce qu'**en tant que dispositif évaporateur (10) il est prévu une pluralité de plaques (40) d'évaporateur et **en ce que** l'agent réducteur est pulvérisé dans la première partie (2) de conduite d'échappement de telle sorte qu'il soit injecté sur l'ensemble des plaques d'évaporateur.

12. Procédé selon la revendication 11, **caractérisé en ce que** l'agent réducteur est injecté dans un angle aigue au plus par rapport à une direction de normale des plaques d'évaporateur dans la première partie (2) de conduite d'échappement.

13. Procédé selon la revendication 9 ou la revendication10, **caractérisé en ce que** l'agent réducteur est injecté au moins approximativement verticalement par rapport à un écoulement de gaz d'échappement dans la première partie (2) de conduite d'échappement.
